# EUROPEAN PATENT SPECIFICATION

(11) **EP 1 809 570 B1**
(45) Date of publication and mention of the grant of the patent: **02.06.2010**
(21) Application number: 05858423.6
(22) Date of filing: 21.09.2005
(51) Int. Cl.: C01B 3/00, C03B 19/10, C03C 11/00

(54) **HOLLOW POROUS-WALL GLASS MICROSPHERES FOR HYDROGEN STORAGE**
GLASMIKROHOHLKUGELN MIT PORÖSEN WÄNDEN FÜR DIE SPEICHERUNG VON WASSERSTOFF
MICROBILLES DE VERRE CREUSES A PAROI POREUSE UTILISEES POUR LE STOCKAGE D'HYDROGENE

(30) Priority: 21.09.2004 US 946464
(43) Date of publication of application: 25.07.2007
(73) Proprietor: Savannah River Nuclear Solutions, LLC, Aiken, SC 29808 (US)
(72) Inventor: SCHUMACHER, Ray, F., Aiken, SC 29805 (US); WICKS, George, G., Aiken, SC 29803 (US); HEUNG, Leung, K., Aiken, SC 29801 (US)
(74) Representative: Robertson, James Alexander
(86) International application number: PCT/US2005/033677
(87) International publication number: WO 2007/011381

(56) References cited:
- EP-A2- 0 150 288
- US-A1- 2004 065 171
- DURET B ET AL: "MICROSPHERES FOR ON-BOARD HYDROGEN STORAGE" INTERNATIONAL JOURNAL OF HYDROGEN ENERGY, ELSEVIER SCIENCE PUBLISHERS B.V., BARKING, GB, vol. 19, no. 9, 1 September 1994 (1994-09-01), pages 757-764, XP002412384 ISSN: 0360-3199

## Description

### FIELD OF THE INVENTION

This invention is directed towards hollow glass microspheres and a process of using the microspheres as part of a hydrogen storage system. The hollow glass microsphere wall defines a series of pores. The pores facilitate the placement of a hydrogen storage material within the interior of the hollow glass microsphere. The porosity of the hollow glass microspheres can thereafter be modified by either altering or reducing the overall pore size or by coating the individual hollow glass microspheres so as to maintain the hydrogen storage material within a sealed interior of the hollow glass microsphere. The coating and/or the controlled pore size enables the selective absorption of hydrogen gas through the walls of the hollow glass microsphere while isolating the hydrogen storage material encapsulated therein from other external gases and fluids.

The hollow glass microspheres can thereafter be subjected to variations in temperature, pressure, or other release stimulus triggers to bring about the release of hydrogen gas. Once dehydrided, the hollow glass microspheres and hydrogen storage material can be reused so as to once again selectively absorb hydrogen gas.

### BACKGROUND OF THE INVENTION

The formation of hollow glass microspheres (HGMs) is well known in the art. The production of hollow glass microspheres has been described in U.S. Pat. Nos. 3,365,315 (Beck); 4,661,137 (Garnier); and 5,256,180 (Garnier), and which are incorporated herein by reference.

It is also known in the art to produce large macrospheres having hollow glass walls which provide a semipermeable liquid separation medium for containing absorbents. The production of macrosphere structures can be seen in reference to U.S. Pat. Nos. 5,397,759 and 5,225,123 to Torobin and which are incorporated herein by reference. The Torobin references disclose hollow glass macrospheres comprising multiple particle glass walls. The reference teaches the use of the macrospheres for gas/liquid separation and for use with absorbents but does not discuss any features or characteristics which would make the microspheres suitable as a hydrogen storage medium.

U.S. Pat. No. 4,842,620 (PPG Industries) is directed to non-crystalline silica fibers having porous walls which are used in gas separation. The fibers described in this application have different physical characteristics than microspheres and which makes fibers less desirable with respect to hydrogen separation and storage capabilities.

U.S. Pat. No. 6, 358, 532 (CaP Biotechnology, Inc.) uses porous-wall hollow glass microspheres for cell clustering and biomedical uses. The porous-wall structures are designed to readily release microsphere contents when present within a biotic system. Alternatively, the microspheres are used to provide a substrate to support cell growth within the porous-wall structure.

U.S. Pat. Appl. No. 2004/0065171 (Hearley et al.) discloses a method for storing hydrogen in hollow glass microspheres containing a hydrogen storage material, for example Palladium or metal hydrides, which has been introduced into the microspheres' interior voids by diffusion. After the introduction of hydrogen, the temperature can be lowered to reduce diffusion, thereby encapsulating the hydrogen. Additionally, the particles can be coated with a hydrogen-permeable layer.

While the above references disclose a variety of glass microspheres and porous-wall structures having various uses in material separation or drug delivery capabilities, there remains room for improvement and variation within the art.

### SUMMARY OF THE INVENTION

It is at least one aspect of at least one embodiment of the present invention to provide for a hollow glass microsphere (HGM) having a diameter range of between about 1.0 micron to about 140 microns, a density of about 0.05 gm/cc to about 0.50 gm/cc, and having a porous-wall structure having wall openings with an average pore size of between about 10 angstroms to about 1000 angstroms, which contains within an interior of the hollow glass microsphere a hydrogen storage material.

It is another aspect of at least one embodiment of the present invention to provide for a hollow glass microsphere containing therein an effective amount of the hydrogen storage material palladium, the hollow glass microsphere having a pore size which prevents the loss of palladium fines from the interior of the hollow glass microsphere.

It is at least one aspect of at least one embodiment of the present invention to provide for a hollow glass microsphere (HGM) having a diameter range of between about 1.0 to about 140 microns , a density of about 0.05 gm/cc to about 0.50 gm/cc, and having a porous-wall structure having wall openings with an average pore size which may range from about 10 to about 1000 angstroms, and which contains within an interior of the hollow glass microsphere a hydrogen storage material, the exterior wall of the hollow glass microsphere containing a barrier coating sufficient to prevent gaseous or liquid contaminants from entering an interior of the HGM while permitting the passage of hydrogen gas through the exterior wall.

These and other features, aspects, and advantages of the present invention will become better understood with reference to the following description and appended claims.

### BRIEF DESCRIPTION OF THE DRAWINGS

A fully enabling disclosure of the present invention, including the best mode thereof to one of ordinary skill in the art, is set forth more particularly in the remainder of the specification, including reference to the accompanying drawing.
Figure 1 is a cross sectional view of a hollow glass porous-wall microsphere containing a hydrogen storage material within the interior of the microsphere.
Figure 2 is a cross sectional view similar to Figure 1 showing a microsphere having an exterior coating.

### DESCRIPTION OF THE PREFERRED EMBODIMENT

Reference will now be made in detail to the embodiments of the invention, one or more examples of which are set forth below. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used on another embodiment to yield a still further embodiment. Thus, it is intended that the present invention cover such modifications and variations as come within the scope of the appended claims and their equivalents. Other objects, features, and aspects of the present invention are disclosed in the following detailed description. It is to be understood by one of ordinary skill in the art that the present discussion is a description of exemplary embodiments only and is not intended as limiting the broader aspects of the present invention, which broader aspects are embodied in the exemplary constructions.

The hollow glass microspheres of the present invention are prepared using a special glass composition which after appropriate heat treatment separates into two continuous glass phases. In the examples provided herein, one of the phases is rich in silica, while the other is an extractable phase. The extractable phase is preferably present in an amount of at least about 30 weight percent of the total glass composition. However, other porous glass compositions may be used.

The extractable phase of the glass composition preferably includes boron-containing materials such as borosilicates or alkali-metal borosilicates. Suitable borosilicates and alkali-metal silicates may be found in reference to the teachings of U.S. Pat. No. 4,842,620 directed to leachable glass fiber compositions and which is incorporated herein by reference.

The extractable and non-extractable glass components are mixed, melted, quenched, and crushed to a fine glass powder consisting of individual glass particles having a particle size of about 5 to 50 microns. The individual glass particles are then reheated using a gas/oxidizer flame. The glass is raised to a temperature where a latent blowing agent within the glass, such as alkali sulfate along with various hydrates, carbonates, and halides, the selection and use of which are well known in the art, causes a single bubble to nucleate within each particle of glass. As the glass particle temperature increases by exposure to the flame, the glass particle reaches a viscosity where the particle transforms to a sphere due to the surface tension forces. As the temperature increases, the pressure within the bubble exceeds the surface tension/viscous forces value and the bubble expands to form a hollow glass microsphere. The hollow glass microsphere is then rapidly quenched to room temperature.

Preferably, the resulting hollow glass microspheres have densities in the range of about 0.05 gm/cc to about 0.5 gm/cc and diameters may range between about 1 to about 140 microns. Once formed, the hollow glass microspheres may be separated on the basis of density so as to select and segregate the hollow glass microspheres according to desired densities. Additionally, it is possible to separate the HGMs according to the microsphere diameter.

The resulting hollow glass microspheres have a glass wall composition in which the glass is essentially homogeneous. The hollow glass microspheres may be heat treated to enhance the glass-in-glass phase separation by mixing the hollow glass microspheres with carbonaceous materials and heating in the absence of oxygen to the desired temperature region. After heat treating the hollow glass microspheres, the homogeneous glass separates into two continuous glass phases: one extractable and the other rich in silica. The extractable phase is readily leachable using strong mineral acids which results in the formation of wall pores within the remaining silica-rich phase. Suitable mineral acids and methods for leaching the glass may be seen in reference to U.S. Pat. No. 4,842,620 which is incorporated herein by reference.

The resulting hollow glass microspheres exhibit a high degree of cell wall porosity. As used herein, the term "porosity" means a series of pores and similar openings which either directly or indirectly define a series of passageways which provide communication between the interior and the exterior of the hollow glass microsphere. An average cell wall porosity of about 10 angstroms to about 1000 angstroms can be achieved using this technology. The cell wall porosity is dependent upon the percentage of extractable components formulated into the special glass composition used in the formation of the HGM and the degree of heat treatment employed. The duration and severity of the extraction process also can have some influence on the characteristics of the resulting cell wall pores including size and density of pores formed.

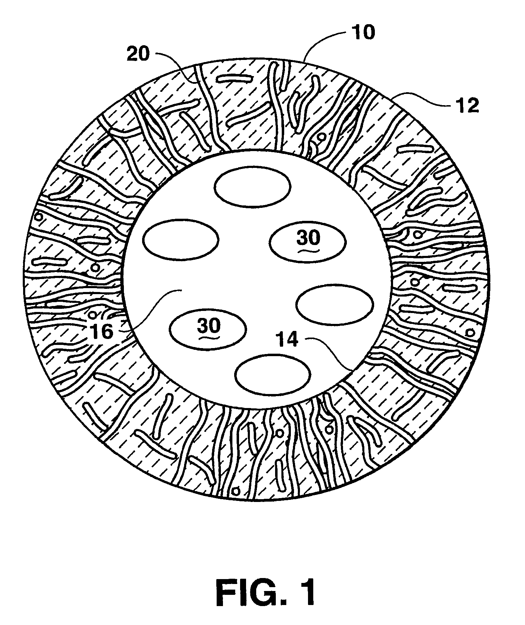

As seen in reference to Figure 1, a cross section through a hollow glass microsphere 10 is provided. Microsphere 10 comprises a glass wall having an exterior surface 12 and an interior surface 14. The microsphere 10 further defines a hollow cavity 16 within the interior of the microsphere. As best seen in reference to the figure, a plurality of pores 20 are defined within the glass wall of the microsphere. As illustrated in Figure 1, a number of the pores 20 provide for communication between an exterior of the hollow glass microsphere and the interior cavity 16 of the hollow glass microsphere. Present within the hollow cavity 16 is a hydrogen absorption material 30. The placement of the hydrogen storage material within the cavity 16 is provided in greater detail below.

Once formed, the porous-wall hollow glass microspheres can be filled with a hydrogen absorbent such as palladium. To successfully introduce palladium into the interior of the HGM, palladium chloride can be forced through the porous glass walls using pressure. Following the introduction of palladium chloride, hydrogen is then introduced under pressure to reduce the palladium chloride to palladium metal. Subsequent heat and vacuum drying may be used to remove any residual hydrochloric acid or water. This process can be repeated through several cycles to increase the amount of palladium ultimately encapsulated within the hollow glass microsphere.

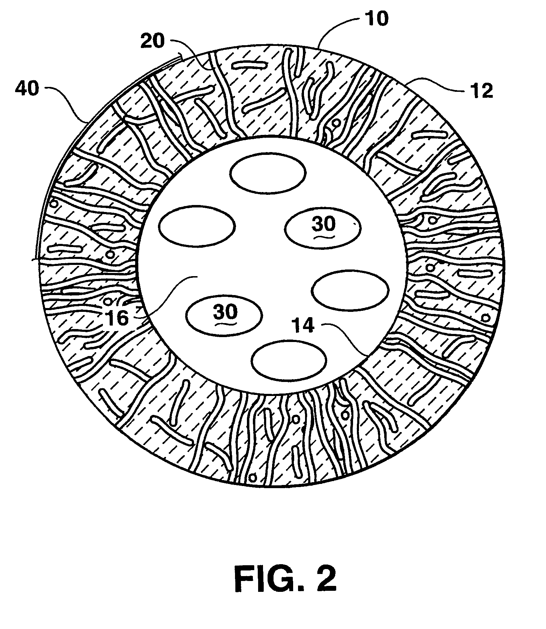

Once a desired amount of palladium is present within the hollow glass microsphere, the porosity of the hollow glass microsphere wall can be altered or reduced by additional heat treatment. Alternatively, the pores can be effectively sealed by applying a coating material 40 such as tetraethyl orthosilicate solution and as illustrated in Figure 2. The coating material can be formulated to permit the diffusion of hydrogen while excluding other gases.

### Example 1

HGMs were formed from a silicate glass composition containing boron oxide and alkali as seen in Table 1 set forth below. The constituents of the glass composition were prepared and heat treated at a temperature of about 600° C for at least 10 hours. It is believed that the 10 hour time interval is sufficient to allow the glass and the HGM walls to separate into two continuous glass phases by the known process of spinodal decomposition. In so doing, two interconnected glass phases are formed within the walls of the HGMs. A first glass phase consists of a high percentage of silica while the second glass phase contains a greater percentage of the alkali and borate material. The alkali borate phase has a greater solubility in a heated acid solution (80-85° C) of 2-3 N HCL solution. During the leaching process it was observed that the HGMs began sinking in the solution indicating that leaching of soluble components believed to be the alkali borate phase was occurring.

**Table 1**

| Glass Composition: | | Glass Powder | HGMs | |
|---|---|---|---|---|
| | Leached HGMs | | | |
| | | (Calculated) | (Chemical Analysis) | (Chemical Analysis) |
| | SiO2 | 59.85 wt% | 70.2 wt% | 88.25 wt% |
| | B2O3 | 22.11 | 16.3 | 04.91 |
| | CaO | 06.09 | 08.08 | 01.66 |
| | F | 02.03 | ND | ND |
| | ZnO | 01.78 | 01.64 | 00.36 |
| | Na2O | 03.9 | 02.51 | 00.69 |
| | P2O5 | 00.77 | ND | ND |
| | S03 | 01.25 | ND | ND |
| | Li2O | 03.0 | 02.32 | 00.54 |
| | Total | 100.78 | 101.05 | 96.4 |

Following the leaching process, it is believed that the HGM cell wall contains small interconnected pores predominantly in the range of about 10 to about 1000 Angstroms and which pass completely through the HGM wall.

It was further observed that following the leaching process, HGMs exhibited a weight loss of approximately 33% which is again indicative of the formation of pores through the selective removal of the alkali borate phase. Further, using a gas pycnometer, the HGM density of the HGMs change from about 0.35 g/cc (unleached) to a density of about 1.62 g/cc for the leached HGMs. The increase in density is further indicative that the alkali borate material has been selectively removed and that openings exist for the gas to enter the interior of the HGM. It is noted that the density of fused silica is about 2.2 g/cc. It is believed that the HGM density following extraction approaches the value of fused silica, but the lower density is indicative that a small percentage of HGMs are not porous or that during the drying process a gel film may have formed over some of the pores and/or not all of the alkali borate phase was extracted during the heated acid treatment.

The porous wall HGMs made according to Example 1 above were compared to commercially obtained non-porous HGMs for determination of total surface area. Using gas absorption techniques, it was demonstrated that the surface area of the non-porous commercial samples was approximately 1 square meter/gram. The surface area of the HGM made according to the present invention was 29.11 square meter/gram. The increased surface area of the porous walls of the HGMs indicates a significant increase in surface area reflective of the formation of pores. It is noted that if the HGMs simply had holes present within the walls, the surface area would merely include the interior and exterior surfaces for an expected value of approximately 2 square meters/gram. Additional analysis of the porous HGMs using gas absorption/deabsorption indicated an average pore size of about 553 Angstroms.

The efficacy of using the porous wall HGMs for hydrogen absorption was also demonstrated by introducing a palladium solution into the porous wall HGMs using a vacuum introduction process. Following introduction into the interior of the HGMs of a palladium tetra amine solution, the palladium salts were precipitated and later reduced by exposure to heated hydrogen gas.

For certain applications, it is noted that by additional heating of the porous HGMs to a temperature of about 1000° C, the porosity can be removed and/or selectively reduced by controlling the temperature and treatment time intervals. It is believed advantageous for some hydrogen storage materials to subsequently remove the porosity once the hydrogen storage material is inserted into the interior of the HGM. Hydrogen can still be cycled into and out of the hydrogen storage material by using sufficient pressure and at temperature combinations as are well known in the art. However, by removing the pores and/or substantially reducing the size of the pores, the hydrogen storage material is protected from gaseous poisons that could render the hydrogen storage material inactive.

The resulting hollow glass microsphere containing a hydrogen absorbent offers numerous advantages for use with hydrogen absorbing technologies. For instance, when palladium metal and other metal hydrides are used in a hydrogen absorption/desorption process, the hydrogen storage material tends to fracture into smaller particles or "fines." The resulting fines can clog filters, limiting gas flow through the filtration bed in hydrogen separation devices, and/or blocking gas flow in hydrogen storage devices resulting in an overall loss of efficiency of the hydrogen absorption/desorption system. However, when encapsulated within the hollow glass microsphere, the resulting fines are contained within the hollow glass microsphere and continue to function in an absorption/desorption capacity.

Additionally, it is possible to select HGMs having a sufficiently small pore size such that gaseous poisons which may interfere with the hydrogen absorbing material are physically excluded from entry into the interior of the HGM. As a result, the HGM functions as a selective membrane which permits the flow of hydrogen gas into and out of the hollow glass microsphere while preventing the entry of larger gaseous or liquid molecules.

While it is possible to force hydrogen into and out of solid-walled microspheres, the use of a porous-wall hollow glass microsphere structure allows hydrogen gas to enter and exit the microsphere at much lower pressures and temperatures. Consequently, less strenuous rehydriding/dehydriding conditions can be employed using the porous-wall structure as a conduit to enable the passage of hydrogen gas through the wall of the glass microsphere.

Where the pore size of the resulting hollow glass microsphere is sufficiently large that gaseous poisons or other materials could enter, it is possible to provide barrier coatings to the exterior of the HGM. The various barrier coatings may be selected for special properties so as to provide for selective membrane properties. One such coating material is a sol gel material having a sufficiently defined pore structure that provides for a barrier against gaseous poisons while permitting the flow of hydrogen gas therethrough. One such sol gel material may be found in reference to the commonly assigned U.S. Pat. No. 5,965,482, and which is incorporated herein by reference.

The hollow glass microspheres, containing therein a hydrogen storage material, offer additional advantages within the hydrogen storage technology field. The hollow glass microspheres used in accordance with the present invention may have diameters of between about 1 micron to about 140 microns. Given the size and selectable particle densities, the resulting hollow glass microspheres have fluid-like properties which make the hollow glass microspheres suitable for easier transport and bulk storage. For instance, transportation of large quantities of the filled hollow glass microspheres may be made utilizing existing pipelines used to convey the supplies of petroleum products and/or natural gas.

Though the collective volume of hydrogen storage material may contain enormous quantities of stored hydrogen gas, the transport is much safer in that the hydrogen is stored within a plurality of discrete hollow glass microsphere vessels. As a result, the dangers associated with the storage of a comparable volume of hydrogen gas is greatly lessened since the volume is now distributed within a large number of individual hollow glass microsphere vessels. The individual hollow glass microspheres provide an enhanced level of safety against explosion and fire in that there are no exposed large volumes of hydrogen gas. For example, a leak or release of HGMs containing releasable hydrogen has a much reduced threat of explosion or fire since no free hydrogen is available. Even if released into flame or high temperature conditions, the insulating properties of the hollow glass microspheres are such that the net result is a series of very small releases of hydrogen gas as opposed to a release of a single large volume of hydrogen gas.

While palladium represents one hydrogen storage material which may be incorporated into the interior of the hollow glass microspheres, it should be noted that a variety of other hydrogen storage materials are also suitable for use within the interior of a porous-wall hollow glass microsphere. Such materials include sodium aluminum hydride, lithium aluminum hydride, titanium aluminum hydride, complex hydrides, and various fused or hybrid hydrogen storage materials such as those described in commonly assigned PCT application PCT/US03/34980 which is incorporated herein by reference, and various catalyzed borohydrides as described in commonly owned U.S. provisional application entitled "Catalyzed Borohydrides For Hydrogen Storage having Attorney Docket No. WSR-78-P filed on August 27, 2004, by Express Mail EV504784466US and which is incorporated herein by reference. and combinations of these hydrogen storage materials. Additionally, the hollow glass microspheres can be utilized to provide a "protective environment" for reactive hydrides or other hydrogen storage materials which occupy the hollow interior of the porous hollow glass microsphere.

It is within the scope of the present invention to provide for a number of different hydrogen storage materials which may be contained within the interior of a suitable HGM. Doing so would allow a plurality of different hydrogen storage media to be utilized within a given application. For instance, within a given volume of hollow glass microspheres, there could be two or more different hydrogen storage materials present within discrete populations of microspheres having different hydrogen release properties. In this way, the volume of evolved hydrogen gas may be controlled or regulated by the appropriate environmental conditions or stimuli needed to release the hydrogen.

In addition, the use of the hollow glass microspheres greatly simplifies commercial recharging of the spent hydrogen storage material. For instance, where the hollow glass microspheres containing the hydrogen storage material are used to power a device, the spent HGM may be removed during a refueling operation and subsequently recharged. By allowing a separate recharging or hydrogen absorption process, the HGMs having a hydrogen storage material can be utilized in various environments such as a hydrogen-powered motor vehicle. To the extent the vehicle only needs to provide for a hydrogen release mechanism, the mechanics and operation of the vehicle may be greatly simplified. Upon refueling with a fresh supply of HGMs (containing hydrided hydrogen storage material) the spent HGMs are simply removed for subsequent rehydriding.

It is also envisioned that the formation of a hollow glass microsphere may be simplified by selection of an appropriate hydrogen storage material to serve as the source of the nucleating gas. In other words, a hydrogen storage material which, when heated, may release hydrogen or other inert gas that may be used as the blowing agent for the resulting microsphere. As a result, it may be possible to use a hydrogen storage or precursor material which evolves a nucleating agent when heated. As a result, it may be possible to form the hollow glass microsphere directly around a hydrogen storage material.

## Claims

1. A hydrogen storage apparatus comprising:
a hollow glass microsphere having a porous wall surrounding an
internal volume, said porous wall defining a series of pores which provide communication between said interior volume and an exterior of said hollow glass microsphere, said pores having a pore size which restricts the entry of gaseous poisons; and,
a hydrogen storage material selected from the group consisting of palladium, alanates, chemical hydrides, and combinations thereof, positioned within said volume of said hollow glass microsphere.

2. The hydrogen storage apparatus according to claim 1 wherein said hollow glass microsphere has a density of between 0.05 gm/cc to 0.50 gm/cc.

3. The hydrogen storage apparatus according to claim 1 wherein said hollow glass microsphere has a diameter ranging from 1.0 micron to 140 microns.

4. The hydrogen storage apparatus according to claim 1 wherein said series of pores have an average pore diameter of between 10 angstroms to 1000 angstroms.

5. The hydrogen storage apparatus according to claim 1 wherein said hollow glass microsphere additionally contains a porous coating on an exterior surface of said microsphere, said porous coating further defining a semipermeable membrane.

6. The process of making a hydrogen storage apparatus comprising the steps of:
forming a hollow glass microsphere having an extractable phase;
removing said extractable phase, thereby providing a porous-wall structure permitting communication between an interior and an exterior of the hollow glass microsphere, said porous wall hollow glass microsphere having a pore size which restricts the entry of gaseous poisons; and,
introducing into an interior of said hollow glass microsphere, a hydrogen storage material wherein said hydrogen storage apparatus can reversibly release and store hydrogen in the presence of gaseous poisons.

7. The process according to claim 6 comprising the additional step of providing a selectively permeable coating on an exterior surface of said microsphere.

8. A process of providing a hydrogen storage apparatus comprising:
forming a porous hollow glass microsphere;
introducing through said pores a hydrogen storage material into an interior of said hollow glass microsphere; and,
thereafter treating said hollow glass microsphere so as to reduce the pore size of said porous hollow glass microspheres to exclude the entry of gaseous poisons to the interior of said hollow glass microsphere.

9. The process according to claim 8 wherein said step of treating said pores of said hollow glass microspheres comprises a method selected from the group of methods consisting of providing a semi-permeable coating, providing a sol gel coating, heat treating said hollow glass microspheres, and combinations thereof.

## Patentansprüche

1. Wasserstoffspeichervorrichtung, die aufweist:
eine Glasmikrohohlkugel mit einer porösen Wand, die ein Innenvolumen umgibt, wobei die poröse Wand eine Reihe von Poren definiert, die eine Verbindung zwischen dem Innenvolumen und dem Äußeren der Glasmikrohohlkugel herstellen, wobei die Poren eine Porengröße aufweisen, die den Eintritt von Gasgiften beschränkt; und
ein Wasserstoffspeichermaterial, ausgewählt aus der Gruppe, die aus Palladium, Alanaten, chemischen Hydriden und Kombinationen davon besteht, angeordnet innerhalb des Volumens der Glasmikrohohlkugel.

2. Wasserstoffspeichervorrichtung nach Anspruch 1, wobei die Glasmikrohohlkugel eine Dichte zwischen 0,05 g/cm³ und 0,50 g/cm³ aufweist.

3. Wasserstoffspeichervornchtung nach Anspruch 1, wobei die Glasmikrohohlkugel einen Durchmesser im Bereich von 1,0 µm bis 140 µm aufweist.

4. Wasserstoffspeichervornchtung nach Anspruch 1, wobei die Porenreihe einen mittleren Porendurchmesser zwischen 10 Å und 1000 Å aufweist.

5. Wasserstoffspeichervorrichtung nach Anspruch 1, wobei die Glasmikrohohlkugel außerdem eine poröse Beschichtung an einer Außenfläche der Mikrokugel aufweist, wobei die poröse Beschichtung ferner eine halbdurchlässige Membran definiert.

6. Verfahren zur Herstellung einer Wasserstoffspeichervorrichtung, mit den folgenden Schritten:
Formen einer Glasmikrohohlkugel mit einer extrahierbaren Phase;
Entfernen der extrahierbaren Phase, wodurch eine Struktur mit poröser Wand gebildet wird, die eine Verbindung zwischen dem Inneren und dem Äußeren der Glasmikrohohlkugel zuläßt, wobei die Glasmikrohohlkugel mit poröser Wand eine Porengröße aufweist, die den Eintritt von Gasgiften beschränkt; und
Einbringen eines Wasserstoffspeichermaterials, in dem die Wasserstoffspeichervorrichtung Wasserstoff in Anwesenheit von Gasgiften reversibel freisetzen und speichern kann, in das Innere der Glasmikrohohlkugel.

7. Verfahren nach Anspruch 6, das den zusätzlichen Schritt zum Bereitstellen einer selektiv durchlässigen Beschichtung auf einer Außenfläche der Mikrokugel aufweist.

8. Verfahren zum Bereitstellen einer Wasserstoffspeichervorrichtung, wobei das Verfahren aufweist:
Formen einer porösen Glasmikrohohlkugel;
Einbringen eines Wasserstoffspeichermaterials durch die Poren ins Innere der Glasmikrohohlkugel; und
danach Behandeln der Glasmikrohohlkugel, um die Porengröße der porösen Glasmikrohohlkugel zu verkleinern und den Eintritt von Gasgiften ins Innere der Glasmikrohohlkugel auszuschließen.

9. Verfahren nach Anspruch 8, wobei der Schritt zum Behandeln der Poren der Glasmikrohohlkugel ein Verfahren aufweist, das aus der Gruppe von Verfahren ausgewählt ist, die aus dem Aufbringen einer porösen Beschichtung, Aufbringen einer Sol-Gel-Beschichtung, Wärmebehandlung der Glasmikrohohlkugeln und Kombinationen davon besteht.

## Revendications

1. Appareil de stockage d'hydrogène comprenant :
une microsphère de verre creux ayant une paroi poreuse entourant un volume interne, ladite paroi poreuse définissant une série de pores qui fournissent une communication entre ledit volume intérieur et un extérieur de ladite microsphère de verre creux, lesdits pores ayant une taille de pore qui restreint l'entrée de poisons gazeux ; et,
un matériau de stockage d'hydrogène choisit parmi le groupe constitué de palladium, d'alanates, d'hydrures chimiques, et de combinaisons de ceux-ci, positionné au sein dudit volume de ladite microsphère de verre creux.

2. Appareil de stockage d'hydrogène selon la revendication 1, dans lequel ladite microsphère de verre creux a une densité comprise entre 0,05 g/cm³ et 0,50 g/ cm³.

3. Appareil de stockage d'hydrogène selon la revendication 1, dans lequel ladite microsphère de verre creux a un diamètre s'étendant de 1,0 micron à 140 microns.

4. Appareil de stockage d'hydrogène selon la revendication 1, dans lequel ladite série de pores a un diamètre moyen des pores compris entre 10 angströms et 1000 angströms.

5. Appareil de stockage d'hydrogène selon la revendication 1, dans lequel ladite microsphère de verre creux contient de manière supplémentaire un revêtement poreux sur une surface extérieure de ladite microsphère, ledit revêtement poreux définissant en outre une membrane semi-perméable.

6. Procédé de fabrication d'un appareil de stockage d'hydrogène comprenant les étapes de :
formation d'une microsphère de verre creux ayant une phase extractible ;
élimination de ladite phase extractible, fournissant de là une structure à paroi poreuse permettant la communication entre un intérieur et un extérieur de la microsphère de verre creux, ladite microsphère de verre creux à paroi poreuse ayant une taille de pore qui restreint l'entrée de poisons gazeux ; et,
l'introduction dans un intérieur de ladite microsphère de verre creux, d'un matériau de stockage d'hydrogène dans lequel ledit appareil de stockage d'hydrogène peut libérer de manière réversible et stocker de l'hydrogène en la présence de poisons gazeux.

7. Procédé selon la revendication 6 comprenant l'étape supplémentaire de fourniture d'un revêtement sélectivement perméable sur une surface extérieure de ladite microsphère.

8. Procédé de fourniture d'un appareil de stockage d'hydrogène comprenant :
la formation d'une microsphère poreuse de verre creux ;
l'introduction à travers lesdits pores d'un matériau de stockage d'hydrogène dans un intérieur de ladite microsphère de verre creux ; et,
par la suite le traitement de ladite microsphère de verre creux afin de réduire la taille de pore desdites microsphères poreuses de verre creux afin d'interdire l'entrée de gaz poisons vers l'intérieur de ladite microsphère de verre creux.

9. Procédé selon la revendication 8, dans lequel ladite étape de traitement desdits pores desdites microsphères de verre creux comprend un procédé choisit parmi le groupe des procédés consistant à fournir un revêtement semi-perméable, la fourniture d'un revêtement de type sol-gel, le traitement thermique desdites microsphères de verre creux, et les combinaisons de celles-ci.
